# EUROPEAN PATENT SPECIFICATION

(11) **EP 2 708 403 B1**
(45) Date of publication and mention of the grant of the patent: **13.08.2025**
(21) Application number: 13004505.7
(22) Date of filing: 16.09.2013
(51) Int. Cl.: B60L 53/63, B60L 58/12, H02J 3/14, H02J 3/00

(54) **System and method for managing load on a power grid**
System und Verfahren zur Verwaltung einer Last auf einem Stromnetz
Système et procédé de gestion de charge sur un réseau électrique

(30) Priority: 14.09.2012 GB 201216494
(43) Date of publication of application: 19.03.2014
(73) Proprietor: POD Point Holding Ltd, London E1 1EE (GB)
(72) Inventor: Fairbairn, David Erik, Coggeshall, Essex CO6 1UE (GB); Large, Stephen, Brentwood, Essex CM13 1AB (GB); Baptista Ochoa, Rafael, Cambridge, CB2 3AP (GB)
(74) Representative: Basck Limited

(56) References cited:
- WO-A2-2011/156776
- US-A1- 2012 146 583

## Description

### Technical field of invention

The present invention generally relates to methods and systems for managing load on a power grid supplying power to a variety of electrical loads; the present invention is, for example, concerned with a case where the electrical loads drawing power from the power grid are battery charging terminals coupled to electrical vehicles (EVs).

### Background to the invention

Electric vehicles (EVs), including hybrid electric vehicles (HEVs), are now widely known in the automobile industry and are advantageous in many respects over conventional vehicles propelled solely through internal combustion engines (ICE) such as vehicles running on gasoline and diesel. A major issue with such EVs is regular charging of batteries of the EVs which provide motive power to propel the EVs. For such charging, the EVs need to draw power from a power supply to which they may be coupled directly or through a battery charging terminal. With an increased usage of EVs, an amount of power consumption through the power grids supplying power to EVs will increase substantially, globally. On account of many customers shifting their focus to EVs in preference to ICE propelled vehicles, the power demand faced by those power grids will substantially increase in future. Eventually, this will lead to a mismatch in power supply and power demand in many regions worldwide, potentially causing imbalances in the power grids.

Document WO2011/156776 A2 discloses a power grid expert system comprising charging station configured for charging a battery in an electric vehicle (EV) from an electric power grid, wherein the charging station optionally comprises a grid tie inverted configured for backfilling power from an electric vehicle connected to the charging system into the electric power grid. The system disclosed in WO publication comprises also a computer and programming that is executable on computer for selectively controlling a charging of the battery in the electric vehicle by the charging station, The system enables optimization charging times and rates based on the grid capacity and demand.

Document US2012/146583 A1 discloses system and method for managing load on a power grid specifically focusing ion the charging of electric vehicles (EVs). By collecting and analyzing data on EVF usage patterns and grid capacity, the system can adjust charging process in real-time to prevent grid overload and ensure a stable power supply. The solution aims to optimize the charging of EVs in a way that minimizes impact on the grid and the user's ability to charge their vehicle. This is achieved through smart scheduling, power demand modulation and predictive analytics that consider both the needs of the power grid and the preferences and habits of EV users.

Conventional systems for balancing loads experienced by power grids, due to energy consumed by EVs for charging purposes, propose time delayed switching of charging cycles of the EVs or systems that focus on the issue of grid load balancing without considering the impact on users of electric vehicles. This may create problems for users of EVs, as there may be certain moments when a power source operable to charge an EV has been restricted due to a demand to reduce load on a power grid supplying power to the power source and this may coincide with the users' need to charge their EVs. As a result, the users' ability to use their EVs would be thereby restricted.

Other attempts in this respect include coupling power line communication (PLC) modems or telemetry systems to the EVs, for measuring charge states of their batteries, either directly or indirectly, through a controller area network (CAN) bus. However, this approach of adding supporting components to the EVs' hardware causes additional complications and also increases costs.

Therefore, considering the aforementioned problems, there exists a need for an effective mechanism for managing a load coupled to a power grid supplying power to EVs while also considering needs of users of the EVs.

### Summary of the invention

The present disclosure seeks to provide a more effective and efficient system and a method for managing load on a power grid; for example, the present disclosure seeks to provide a more effective and efficient system and a method for managing a power distribution through, and a power load on, a power grid, when one or more electrical loads are coupled thereto, for drawing power therefrom. The electrical loads may be electric vehicles (EVs) connected to the power grid directly or via battery charging terminals and the method allows for managing load without impacting a user's ability to use the EV due to insufficient state of charge due to interrupted charging.

The object is attained by the method according to claim 1 and the system according to claim 12. Preferably the method comprises the features of dependent claims 2-11. Preferably the system comprises features of dependent claims 13-14.

In one aspect, the present disclosure provides a method of managing a load experienced by a power grid supplying power to one or more electrical loads, which derive power from the power grid. The method includes monitoring an operating state of one or more electrical loads. As a result of the monitoring, usage information corresponding to one or more of the one or more electrical loads is obtained and from this user behavioural patterns are established. The usage information is based upon monitoring parameters of any of the electrical loads, for example the parameters optionally include an identifier of the electrical load, a start time stamp, an end time stamp, a duration of power consumption, a quantatitive value of power consumption, fluctuations and variations in the rate of power consumption and other parameters.

Subsequently, the method includes analysing the usage information, in order to infer user information and user - vehicle behavioural patterns which may include parameters such as average number of usage cycles in a period of time, a distribution of durations of those usage cycles, power drawn during those usage cycles, and other parameters.

The method then includes controlling the operating states of one or more electrical loads based on the usage information and user-vehicle behavioural patterns. Specifically, the method includes switching on or switching off, or reducing the power demand or increasing the power demand of one or more of the electrical loads based on an availability of energy from the power grid as a function of the number of active electrical loads at a given point in time whilst balancing the 'global' needs of the system to reduce or increase the power demand with the 'local' needs of a user who's behavioural model reflects their tolerance to charge cycle interruption at any given time.

Optionally, the embodiment of the method is characterised in that the at least one external agent that sends the at least one request to the central controller is contacted through at least one communication channel to inform the at least one external agent of the state of the execution of the at least one request sent.

Optionally, the embodiment of the method is characterised in that at least one user of the at least one electrical load sets preferences concerning the controlling of the operating state of the at least one electrical load using at least one communication channel, wherein the preferences include at least one of the amount of time the usage of the electrical loads may be interrupted and may not be interrupted.

Optionally, the embodiment of the method is characterised in that at least one operator of the central controller uses a Human-Machine Interface (HMI) to monitor at least one of a state of the central controller, a state of all electrical loads connected to it at any given time, predictions obtained, historical information, wherein the HMI allows the at least one operator to change manually any of the decisions made by the central controller and to change any parameters used by the central controller.

= The embodiment of the system is characterised in that the monitoring module monitors the operating state of the at least one electrical load by using at least one communication channel between the at least one electrical load and the monitoring module, wherein the monitoring of the at least one electrical load is performed without any active input from users of the at least one electrical load, wherein the monitoring is performed in one of a continuous manner, a real time manner and an intermittent manner when the at least one electrical load sends messages to the monitoring module at the start of each usage cycle, at the end of the usage cycle, and at any time during the usage cycle.

Optionally, the embodiment of the system is characterised in that the monitoring module includes a logging module, wherein the usage information obtained from the at least one electrical load is stored in the logging module and analysed by the analysing module, wherein the analysis of the usage information includes calculating parameters which include at least one of a frequency profile of usage cycles, a distribution of the lengths of the usage cycles, and a distribution of the power drawn during the usage cycles.

Optionally, the embodiment of the system is characterised in that the analysing module includes a predictor module, wherein the predictor module generates the predictions about the usage characteristics of the at least one electrical load by using stored historical information and calculated parameters, the predicted usage characteristics including at least one of: a duration of the usage cycles of the loads, a power drawn by the loads during their usage, and a probability of the loads drawing power at specific times in future.

Optionally, the embodiment of the system is characterised in that the analysing module includes a request receiving module, wherein the request receiving module receives the at least one request received from the at least one external agent, and wherein the at least one request includes performing one of: shedding a specified amount of power, maintaining a total amount of power supplied to the at least one load below a specified maximum, and increasing the power supplied to the loads, wherein the at least one request specifies whether they are applied to one of: the whole power grid or a subset of the power grid, and wherein the at least one request also specifies a time frame in which the at least one request is to be executed.

Optionally, the embodiment of the system is characterised in that the analysing module includes a request evaluating module, wherein when the at least one request is received, the request evaluating module determines one of:
a. to accept the at least one request completely;
b. to accept the at least one request partially; and
c. to reject the at least one request, on a basis of the predictions obtained for one of the whole grid or a subset of the power grid.

Optionally, the embodiment of the system is characterised in that the controlling module includes a communication module for contacting the at least one external agent that sends the at least one request through at least one communication channel to inform the at least one external agent of a state of execution of the sent at least one request.

The embodiment of the system is characterised in that the analysing module includes a rank assigning module, wherein the rank assigning module establishes a ranking of the at least one electrical load, whenever it is decided that the operating state of the at least one electrical load is to be altered in order to accept the at least one request, wherein the ranking determines which of the at least one electrical loads' operating state should be changed, wherein the ranking is established on a basis of factors which include a predicted operating state of each load, a recorded past operating state of each load, a likelihood of the predictions pertaining to each load being correct, user satisfaction, and costs involved with controlling each load.

Optionally, the embodiment of the system is characterised in that the controlling module includes a command sending module configured to send at least one command via at least one communication channel to control an operating state of the at least one electrical load, wherein the at least one command sending module is operable to send commands for at least one of: interrupting a usage of the at least one electrical load, reducing power supplied to the at least one electrical load, increasing power supplied to the at least one electrical load, and resuming the normal usage of the at least one electrical load, wherein the at least one command is executed on a basis of a time frame provided in the at least one command, wherein the at least one command is executed as soon as it is received when no time frame is defined in the at least one command.

Optionally, the embodiment of the system is characterised in that the system is configured to allow at least one user of the at least one electrical load to set preferences concerning controlling of one or more operating states of the at least one electrical load using at least one communication channel, wherein the preferences include at least one of: an amount of time the usage of the electrical loads may be interrupted, and an amount of time the usage of the electrical loads may not be interrupted.

The system and the method enable efficient management of a load distribution through a power grid, such as smoothing out peaks in a demand curve in order to contribute to effective power grid balancing, without affecting a normal usage of the electrical loads, and without there being a need to install any additional complex hardware within the electrical load, as aforementioned. The system requires no increase in computational and measurement capacity at the vehicle nor communication systems from the vehicle by which to transmit information. By collecting the historical information of charging events and then modelling the patterns of recharging events, the state of the vehicle is predicted rather than measured.

### Description of the diagrams

Embodiments of the present invention will be described, by way of example, with reference to following diagrams wherein:
**Fig. 1** is an illustration of an environment for managing load on a power grid supplying electricity to a plurality of electrical loads, in accordance an exemplary embodiment of the present disclosure; optionally, the plurality of electrical loads includes one or more battery charging terminals;
**Fig. 2** is an illustration of an apparatus for managing load on a power grid, based on requests received to alter the load on the power grid, in accordance with an embodiment of the present disclosure;
**Fig. 3** is a detailed illustration of an apparatus for managing load on a power grid, based on requests received, in accordance with an embodiment of the present disclosure;
**Fig. 4** is an illustration of steps of a method of managing and distributing load on a power grid, based on receiving a request to alter the load on the power grid, in accordance with an embodiment of the present disclosure; and
**Fig. 5** is an illustration of an exemplary embodiment for managing and distributing load on a power grid when a load shed request is received, in accordance with an embodiment of the present disclosure.

In the accompanying diagrams, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### Description of embodiments of the invention

A method is specifically explained in the description with reference to an example case where it pertains to electric vehicles (EVs), including hybrid electric vehicles (HEVs).

EVs are now widely used in many countries, as an alternative to vehicles propelled solely through their internal combustion engines (ICE), despite ICE-propelled vehicles having some overriding advantages. A major concern in respect of these EVs is that they require periodic charging of their batteries when employed in practice. Power grids are connectable to these EVs, for charging their batteries. Due to the increased use of these EVs, a need for managing power consumption through power grids, for charging such EVs, has significantly increased. An additional problem is that times of day when most of charging of the batteries takes place coincides with the peaks in a demand curve for power at a national level. In addition the capacity to involve an individual charging station and EV often varies depending on the behaviour patterns of the user associated with the EV. Some EVs may be used very little whilst other regularly and these different behaviours will change the magnitude of availabiilty for involvement in grid load management events. These behaviour differences will manifest themselves in different states of charge when EV or other vehicles are connected to a charging station and differernt target states of charge are initiated to allow 'normal' use for the particular user. Therefore, there arises a need to intelligently manage a load distribution through power grids whilst respecting a second series of system objectives to overcome the aforementioned challenges.

Conventionally, approaches which address the aforementioned challenges tend to complicate hardware of the EVs', by installing additional components within the EVs, to measure associated battery charge states. Furthermore, most conventional approaches do not consider the satisfaction of users of the EVs when performing load management, rather they assume that the battery state of charge must be full come the end of charging cycle. With the development of EV and battery technology the range of the vehicle due to increased efficiency and increased battery capacity may well result in EVs typically never being fully charged as the user behaviour does not require. Thus our approach of monitoring, determination and modelling what the user behaviour or vehicle behaviour requires would better satisfy the end user than a system that does not recognise the user behaviour and simply aims to fill the battery every charge cycle.

The present disclosure pertains to a method and a system for efficiently managing load distribution through a power grid supplying power to a plurality of EVs, for example mutually different EVs, connected to the power grid through multiple charging terminals. Moreover, the method and system optionally do not require any extra hardware to be installed or any transmission of data between vehicle and another part of the system, they do not require active input from users of the EVs, and they do not noticeably alter the satisfaction of the users of the EVs.

The following embodiments are described as applied to a situation where the electrical loads connected to the power grid are battery charging terminals coupled to electric vehicles (EVs). However, they can also be applied to situations where the electrical loads drawing power from the grid are of a mutually different nature, so long as they fulfil the conditions indicated at the end of this description of the embodiments.

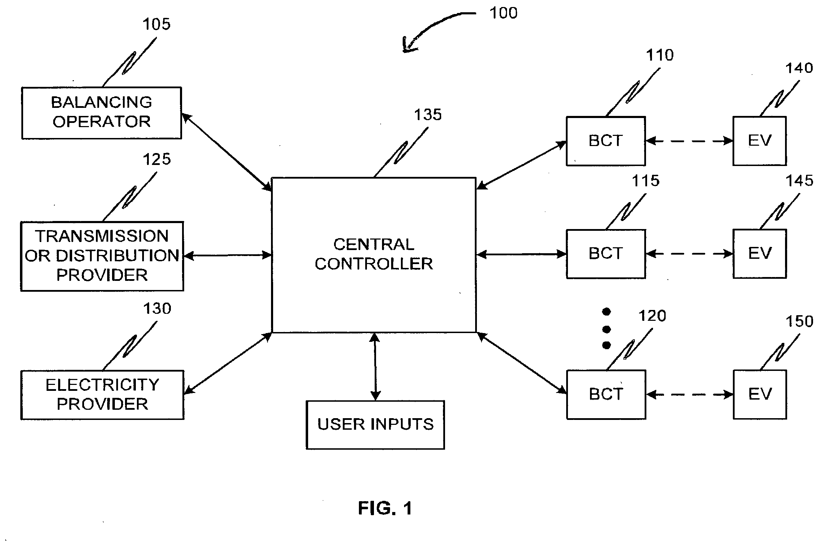

Referring to **Fig. 1****,** there is shown an illustration of an exemplary environment for managing load on a power grid supplying electricity to a plurality of electric loads in accordance with an embodiment of the present disclosure. In this embodiment, the electric loads are battery charging terminals from which EVs draw power to charge their batteries.

A balancing operator **105** provides balancing services and supplies electricity to one or more battery charging terminals **110, 115** and **120.** The balancing operator **105** may, for example, be a power grid. Though only three battery charging terminals have been shown for illustrative purpose, this number of battery charging terminals is not intended to limit the scope of the present disclosure. The battery charging terminals **110, 115** and **120** supply power for charging the EVs **140, 145** and **150,** respectively.

A transmission or distribution provider **125** controls the power supplied to some of the battery charging terminals. Moreover, an electricity provider **130** provides the power for some of the battery charging terminals. The balancing operator **105_**may be, for example, a big electricity transmission company as National Grid^{®} in UK. The transmission or distribution provider **125** may, for example, be a company such as UK Power Networks^{®}, and the electricity provider **130** may be a small private electricity provider such as Haven Power^{®}, Dual Energy^{®} and Opus Energy^{®} in the UK. There may be, for example, more than one small private electricity provider; the number of private electricity providers is not intended to limit the scope of the present disclosure.

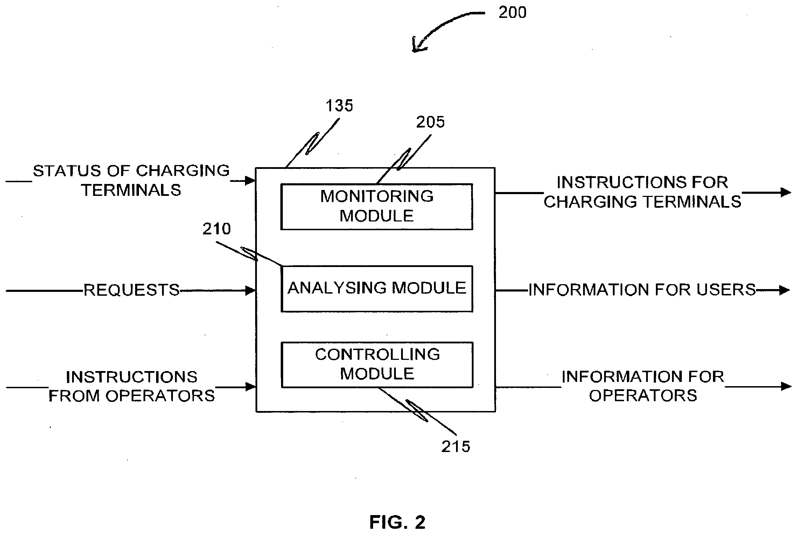

The balancing operator **105,** the transmission or distribution operator **125** and the electricity provider **130** are connected to a central controller **135.** Furthermore, users of the electric vehicles **140, 145** and **150** provide user inputs **160** to select preferences regarding the charging of their EVs. The users provide the user inputs **160** using a communication channel; the communication channel may, for example, be a webpage or a smart phone application executing upon a smart phone or similar wireless communication device. The central controller **135,** together with the balancing operator **105,** the transmission or distribution provider **125,** the electricity provider **130,** the user inputs **160,** and the battery charging terminals **110, 115** and **120,** control the power supply to the battery charging terminals **110, 115** and **120,** in accordance with an exemplary embodiment of the invention. The central controller **135** is described in detail in conjunction with **Fig. 2****,** **3** and **4** below.

In **Fig. 2****,** there is provided an illustration of an apparatus **200** for managing and appropriately distributing load from, for example, the balancing operator **105** to the EVs **140, 145** and **150.** The apparatus **200** may, for example, receive and address requests to reduce the load on the grid instantaneously, to reduce the load in the future, to keep the load under a given maximum, to increase the load on the grid, or to make any other changes to the load on the grid.

In an embodiment, the central controller **135** includes a monitoring module **205,** an analysing module **210** and a controlling module **215;** these modules **205, 210, 215** are optionally implemented using digital hardware and/or software applications executing upon computing hardware. Moreover, in other embodiments, one or more of, or portion of, the monitoring module **205,** the analysing module **210** and the controlling module **215** may be included in the balancing operator **105,** the distribution network operator **125,** the energy provider **130,** and/or the battery charging terminals **110, 115** and **120.**

The monitoring module **205** monitors usage of the battery charging terminals **110, 115** and **120** to obtain usage information from each of them. The analysing module **210** stores and analyses that usage information to determine user behaviour patterns , establish new calculated parameters and makes a series of predictions for the future. The user behaviour patterns, which may also be referred to as vehcile behviour patterns, may in addition to what has been mentieond earlier also inclulde parameters such as average battery states of charge thorughout a period such as a day, variation in day to day battery states of charge due to different behaviours, specific reoccuring events regarding vehicle usage (weekly super market trips, collection of children from school) and other parameters. It also receives requests to alter the load on the power grid, for example for implementing smart grid. The controlling module **215** controls the operating state of the battery charging terminals **110, 115** and **120** whenever a request is received, based on the analysis performed by the analysing module **210.** When a request is received and the analysis is performed by the analysing module **210,** the controlling module **215** sends instructions to some of the battery charging terminals **110, 115** and **120** to control their operating state. Moreover, the controlling module **215** optionally receives instructions from one or more human operators. The one or more operators can monitor the status of the system, and override, or change constants related to the apparatus **200.**

Typically, the controlling module **215** responds to a request to reduce a magnitude of power peaks in the power demand from the power grid, namely "to smoothen peaks in the demand curve". Typically, there is a high demand on power grids in a national level between 18:00 hrs and 21:00 hrs; moreover, a majority of charging of electric vehicles is envisaged also to take place in this time frame.

In an embodiment, one or more of the monitoring module **205,** the analysing module **210** and the controlling modules **215** send information to users of the EVs **140, 145** and **150** by sending one or more messages to the users directly and/or publishing them on a web platform. The users may, for example, access the information by visiting the website or using a smart phone application. Moreover, one or more of the monitoring module **205,** the analysing module **210** and the controlling modules **215** may send information relevant to human operators responsible for the apparatus **200.**

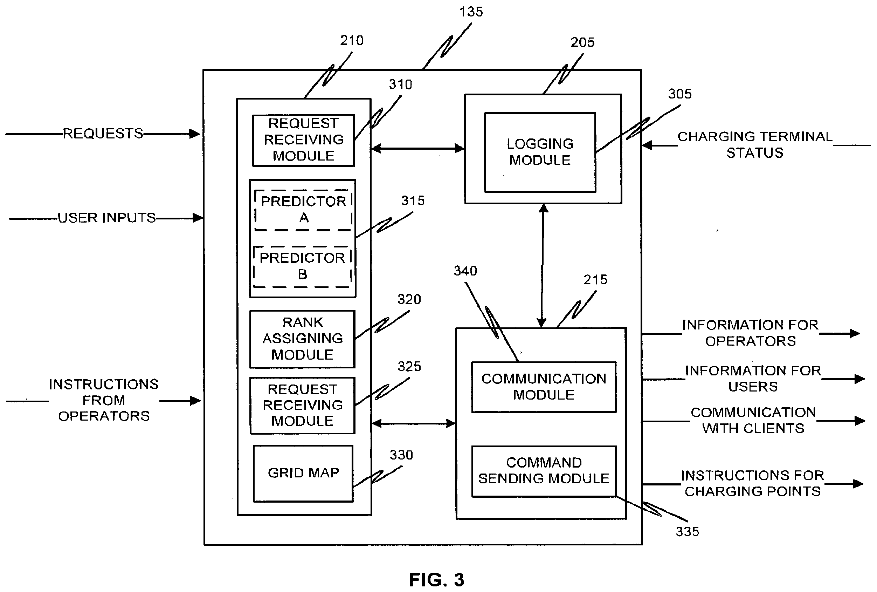

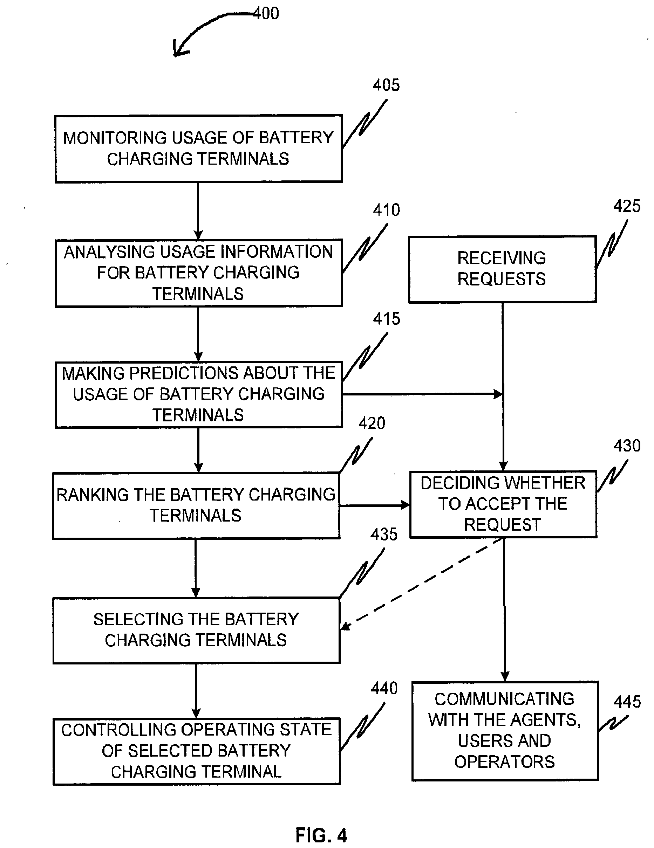

The monitoring module **205,** the analysing module **210** and the controlling module **215** will now be described in more detail with reference to **Fig. 3** and **4** below.

In Fig. 3, there are shown sub-modules of each of the monitoring module **205,** the analysing module **210** and the controlling module **215** in accordance with an exemplary embodiment.

In the present example, the monitoring module **205** includes a logging module **305.** The monitoring module **205** monitors the operating state of the battery charging terminals **110, 115** and **120** by receiving messages from them through one or more communication channels, for example wireless and/or optical fibre communication channels. The messages include one or more of:
(a) start-time stamps when the terminals **110, 115** and **120** begin a usage cycle;
(b) end-time stamps when the **110, 115** and **120** finish the usage cycle;
(c) quantatitve power consumption messages indicating the amount of power drawn during the present cycle, wherein the power consumption messages may be sent periodically; and
(d) duration of power consumption,
(e) fluctuations and variations in the rate of power consumption
(f) other types of commands.

The monitoring module **205** uses the messages received to determine EV user behaviour models that indicate at any particular discrete time the state of charge of the battery, the next required usage window for the vehicle including duration and energy requirements. The messages recieved are also used to infer the operating state of the battery charging terminals **110, 115** and **120.** Thereafter, the usage information and parameters associated with the user behavioural model obtained are stored in the logging module **305,** which keeps an historical profile for each users of the battery charging terminals.

The analysing module **210** includes a request receiving module **310,** a predictor module **315,** a rank assigning module **320,** a request evaluating module **325,** and a grid map **330.**

The predictor module **315** analyses the usage information stored in the logging module **305** to make predictions about the user behavioural requires and from these the infered charging status of the battery charging terminals **110, 115** and **120** in the future. The predictor module **315** contains two sub-modules "Predictor A" and "Predictor B". This is explained in detail with reference to **Fig. 4** below.

The request receiving module **310** receives requests for altering the load on the power grid, which may consist of one of shedding load instantaneously or in the future, keeping the load under a given maximum, or increasing the load. In other words, the request receiving module **310** is beneficially used for implementing smart grid.

The request evaluating module **325** receives information from other modules in the central controller **135** to evaluate and decide whether or not the requests received can be executed. This is explained in further detail with reference to **Fig. 4** below.

The rank assigning module **320** assigns a ranking score to each of the battery charging terminals **110, 115** and **120** for each time slot at a present time and at a future time. The ranking score represents a desirability to use each given battery charging terminal **110, 115** and **120** when dealing with a request to alter a total load on the power grid.

The grid map **330** contains a geographical and topological view of where each battery charging terminal is located physically, and how it is situated in a tree structure of a transmission and distribution network of the power grid. The grid map **330** is used when a request is received for load adjustment in specific geographical areas, and or a request load adjustment is received for a specific section of the distribution or transmission network.

Finally, the controlling module **215** is used when a request has been received and accepted, and therefore requiring that the operating state of at least one of the battery charging terminals **110, 115** and **120** has to be controlled. The controlling module **215** contains a command sending module **335,** which sends commands to the selected battery charging terminals in order to control their operating state; the commands are also sent to a communication module **340,** that is used to communicate information to external agents that sent the requests, to the users of the EVs, and to the human operators responsible for the apparatus **200.**

Referring to **Fig. 4****,** there is shown an illustration of steps carried out by various modules and related subsystem elements described so far in the disclosure. At a step **405,** the monitoring module **205** is operable to communicate with the battery charging terminals **110, 115** and **120** connected to the central controller **135** via one or more communication channels. When a battery charging terminal starts a new usage cycle, the battery charging terminal sends a message to the monitoring module **205.** Similarly, messages are sent when the power consumption pauses or the usage cycle is finished, when an EV is disconnected from the battery charging terminal. Messages can also be programmed to be sent periodically or on request of the central controller **135** indicating the amount of power drawn since the start of the usage cycle. The messages received by the central controller **135** are used to infer the operating state of the battery charging terminals **110, 115** and **120.**

The monitoring module **205** also identifies the battery charging terminal from which the monitoring messages are received, by assigning an identification number to each battery charging terminal. Moreover, at the step **405,** the monitoring module **205** stores the information obtained from the charging terminals in the logging module **305,** so that a usage history is kept for each of the battery charging terminals.

At a step **410,** the analysing module **210** analyses the information stored in the logging module **305.**

The analysing module **210** calculates a series of parameters for each battery charging terminals for which information is stored in the logging module **305.** The parameters calculated may include one or more of:
(a) an average number of usage cycles per day;
(b) a distribution relating the number of usage cycles per day and the days of the week during which usage has occurred;
(c) a distribution of the lengths of the usage cycles, including a mean length of the usage cycles, and a standard deviation from that mean;
(d) a similar distribution of the amount of power drawn during the usage cycles; and/or
(e) the likely state of charge of the vehicle at differnt times of the day
(f) the next charging event quanitity of energy that the EV shall require in order to satisfy the particular user behavioural model
(g) other parameters.

A key advantege of the embodiment is that forming a user behaviour model that predicts the state of charge of a battery in an EV, the next re-charge energy demand and/or the acceptable charge window does not require additional measurements. The parameters used in the behavioural model are derived from historical usage characteristics for the purposes of understanding the current state of an electrical load again without need to take additional measurements.

In another embodiment, each of the charging cycles of the battery terminals may be classified according to some predefined user types, depending on the characteristics of its usage information; for example, certain battery terminals may be adapted to charge electric commercial vehicles and buses which have higher power requirements in comparison to compact automobiles. The results of this analysis are stored in the logging module **305.**

At a step **415,** the predictor **315** makes a series of predictions based on the information stored in the logging module **305** and on the analysis performed by the analysing module **210** in the step **410.** The sub-module "Predictor A" contains a set of algorithms that are executed each time a battery charging terminal is connected to the central controller **135** and starts a usage cycle. The Predictor A uses the parameters obtained for a battery charging terminal in the step **410** as inputs to make predictions about the battery charging terminal that has started a usage cycle. The prediction made consists of a look up table, or similar database record, indicating the predicted operating state for that battery charging terminal in 5 minute intervals for the following 24 hours. The duration of the time intervals and the total length of the prediction are not limited to the values given in this disclosure and may be altered at the discretion of the operators of the central controller 135. The Predictor A predicts operating state of the terminals that have started a new usage cycle taking into account:
(a) the time and day when the cycle has started compared with the historical profile of number of cycles for that terminal;
(b) the average length of the cycles of that terminal, and the standard deviation of those lengths; and
(c) the type of the given terminal in an embodiment in which the terminals are classified in predefined types.

For example, a first usage profile for a given terminal may suggest that the terminal performs on average one usage cycle a day during weekdays, and two or three cycles during weekends. Furthermore, the average length of the weekday cycles may be five hours, with a standard deviation of one hour. The user profile pertaining that terminal may also include the time when the EV is usually disconnected from the terminal, which in this case may be 08:00 hrs in the following day. Therefore, if that terminal starts a charging cycle on a Thursday at 19:00 hrs, Predictor A would write into a look up table or similar that the predicted state of the terminal would be: charging and drawing power at the standard rate starting at 19:00 hrs, and finishing at around 24:00 hrs with a standard deviation of one hour. The time slots from 23:00 hrs to 01:00 hrs would therefore be marked as slots where the behaviour of the terminal is less predictable. Finally, the Predictor A would predict that the EV would stay connected to the terminal, but without drawing any power, from 01:00 hrs to 08:00 hrs.

A manner in which the Predictor B functions will be explained in detail later in this section.

At a step **425,** an external agent, which may be the balancing operator **105,** such as the National Grid, a registered trade mark (^{®}), issues a request to the central controller 135 through an agreed communication channel. The request may specify whether it is desired to shed an amount of load instantaneously, to shed an amount of load in the future, to keep the total load on the grid below a specified maximum, or to increase the amount of load on the grid. The request may also specify whether the request should be applied to the whole power grid, or only to some subset of the power grid, which may be a geographical subset of the power grid, or a subset representing a smaller distribution network inside the power grid. The request is received by the request receiving module **310.**

At a step **430,** the request is passed to the request evaluating module **325,** which decides whether it is best to accept the request, to reject the request, or to accept the request partially or in different terms than received. In order to make this decision, the request evaluating module **325** obtains outputs from the predictor module **315,** which includes both the Predictor A and the Predictor B, and the rank assigning module **320.**

A step **420** is carried out whenever a request is received and the request evaluating module **325** needs to make a decision about its acceptance, partial acceptance or rejection. At the step **420,** the rank assigning module **320** assigns a ranking score to each of the battery charging terminals connected to the system for each of the time slots during which the request received should be executed.

The ranking score associated to a battery charging terminal and a time slot indicates, on the one hand, whether or not that terminal can be controlled during that time slot without breaking some predefined rules, which ensure that the user of that terminal is not left dissatisfied. On the other hand, in the case when the terminal can be controlled, the score represents a desirability to control that given terminal in that given time slot. The score of that terminal in that slot can therefore be compared with the scores of other terminals or other time slots in order to select which terminals are the most desirable to control.

The rank assigning module **320** uses the output of the Predictor A, which is stored, as has been explained earlier, in a look up table or similar; the output of the Predictor A may take into account one or more of these factors:
(a) firstly, the amount of time the usage cycle of each terminal has already been interrupted or altered, in order to verify that the EV drawing power from that terminal will be charged as much as possible when the user disconnects it from its battery charging terminal; and
(b) secondly, whether the prediction made by the Predictor A for that battery charging terminal at the given time slot is marked as reliable, or as less predictable. For example, if the time slot is within one standard deviation of the predicted end of a usage cycle, the prediction for that time slot would be less reliable, and therefore it would be less desirable to control that terminal at that time slot, and consequently the ranking score assigned would be low.

The rank assigning module **320** would also consider the user input **160** introduced by the user, if any. In an embodiment, users may have the option to opt out temporarily of the controlling of the operating state of their loads, in which case the battery charging terminals belonging to users that had selected such option would be given low ranking scores, or would be marked as unavailable to control. The rank assigning module **320** may also take into account other factors which are not explicitly described in this disclosure.

Returning to the description of the step **430,** the request evaluating module **325** obtains the ranking scores of all the battery charging terminals connected corresponding to the time slots during which the request should be executed. Consequently, if enough battery charging terminals are found to be marked by the ranking assigning module **320** as available to control, the request would be accepted. The request may be rejected or accepted partially if there were not enough battery charging terminals available to control so as to accept the conditions of the request.

In another embodiment, incoming requests may be assigned a priority score to indicate their importance. According to this score, the request evaluating module **325** may select a limit on the ranking score in order to decide which battery charging terminals to select. For example, when a high priority request is received, the request evaluating module **325** may decide to select any battery charging terminals with a ranking score higher than 20. However, if the request of low priority is received, the request evaluating module **325** may decide to choose only the battery charging terminals with ranking scores greater than 50. The values of ranking scores in this paragraph have been chosen arbitrarily for illustration purposes, and other values are possible when implementing the present invention.

Moreover, at the step **430,** the request evaluating module **325** obtains information from the Predictor B. At the step **415,** the Predictor B makes predictions on a global level, for the whole power grid, in contradistinction to the Predictor A, which makes predictions for individual battery charging terminals. The Predictor B contains algorithms that calculate, for each time slot in each day in the year, the types of requests that would be accepted by the central controller **135,** and the ones that would be rejected. In order to implement such a calculation, the Predictor B obtains the historical information stored in the logging module **305** and applies the algorithms already described for the steps **415, 420** and **430** to that historical information; however, instead of taking real requests, the Predictor B tries arbitrary requests in order to identify, for example by simulation, what types of requests could be accepted and what types would be rejected according to the historical information.

The Predictor B beneficially outputs its findings in the form of a look up table or similar database format, relating each time slot in the year with the value of the requests that would be accepted in those time slots.

Therefore, the last part of the step **430** described previously involves obtaining information from the Predictor B in the cases when the request being evaluated was referring too far into the future. In these cases, since the temporally immediately available predictions may be unreliable, the predictions made by the Predictor B based on real data from situations in the past may contribute to making an accurate decision about whether or not to accept incoming requests.

Steps **435** and **440** involve selecting the final battery charging terminals to control, and performing the control of their operating state. These steps are carried out by the command sending module **335.** At the step **435,** in the case where a request is accepted as indicated in the previous step, the command sending module **335** selects a number of battery charging terminals until the request accepted by the request evaluating module **325** is accepted. The terminals are then selected according to their ranking scores, so that the ones with higher scores are selected first.

Thereafter, at the step **440,** the command sending module **335** sends commands to the selected battery charging terminals in order to control their operating state. These commands may be sent via one or more communication channels, for example wireless communication channels. The commands may include instructions such as to interrupt the usage of a terminal, to reduce the power drawn by a terminal, to increase the power drawn by a terminal, to resume the normal usage of a terminal, or other types of instructions. These commands may be executed instantaneously when received, or they may include a time field indicating in the time frames in the future in which they should be executed. In an embodiment, the battery charging terminals may be equipped with a memory module that would allow them to receive a variety of commands, and then execute them according to the time frames indicated in them.

At a final step **445,** a communication module **340** sends information regarding the state of the execution of the received requests to one or more of:
(a) the agents that sent the requests;
(b) the users of the EVs connected to the battery charging terminals; and
(c) to the human operators in charge of the central controller **135.**

This information may be communicated through various channels that may include a series of web pages, a smart phone application, or others.

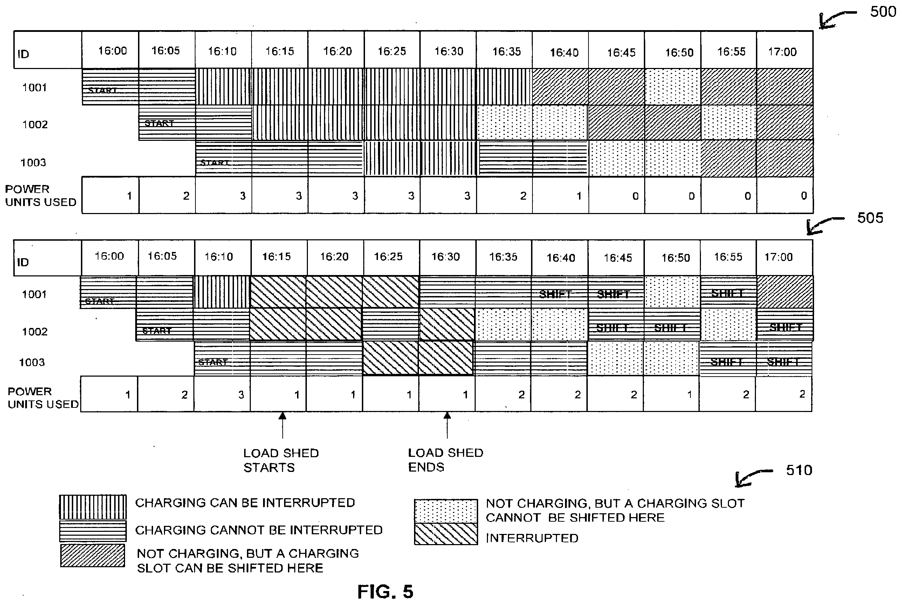

An exemplary execution of the aforementioned steps is described with reference to **Fig. 5** attached. In **Fig. 5****,** there are shown two lookup tables **500** and **505,** accompanied by a legend **510.** The lookup tables **500** and **505** illustrate the operating state of three battery charging terminals **110, 115** and **120** which, in this example, have been assigned corresponding identification numbers **1001, 1002** and **1003** respectively.

According to the table **500,** the battery charging terminals **110, 115** and **120** start drawing power at 16:00 hrs, 16:05 hrs and 16:10 hrs respectively in a given day. As soon as they start drawing power from the power grid, the algorithms described previously for implementing the Predictor A look up the historical usage information stored accessible to them. In this example case, the Predictor A has predicted a charging cycle of 40 minutes for the first terminal, 30 minutes for the second terminal, and 35 minutes for the third terminal. In this example, the effect of the standard deviation as described previously is not considered.

The Predictor A has allocated to each of the terminals **110, 115** and **120** an initial "window" of 15 minutes in which they will be "charging and cannot be interrupted" as shown in the legend. This window provides an initial uninterrupted amount of charging to each of the EVs connected to the charging terminals so as to make sure that they are connected properly.

Still in the table **500,** the total load on the power grid has been calculated for each time slot. In this case, measured in "power units used", it can be seen that in the time slot 16:00 hrs to 16:05 hrs, only the first terminal will be drawing power, therefore the power used will be 1 unit. Subsequently in the time slot 16:05 hrs to 16:10 hrs, it is predicted that 2 units will be used, and so on until the end of the predictions, which in this example reach up to one hour into the future.

Now, considering the table **505,** the same situation is represented, but in this scenario a request is received before 16:15 hrs. The request is asking for the total load on the power grid to be maintained at a maximum of 1 power unit during a time frame 16:15 hrs to 16:35 hrs. According to the predictions on the table before the request was received, which are shown in the table **500,** the number of power units used during the time frame mentioned in the request is 3. Therefore, at least 2 power units must be shed for the duration of the request, in order to fulfil it.

When the request is evaluated in order to determine whether or not to accept it, the ranking module is executed for each of the terminals and each of the time slots referred to in the request. In this example, the output of the ranking module has been represented as shown in the legend, differentiating between time slots that can be interrupted, and time slots that cannot be interrupted.

In this example case, as can be seen, there are enough time slots in the time interval 16:15 hrs to 16:35 hrs that can be interrupted in order to keep the total load at the indicated maximum of 1 power unit.

Thereafter, the selection of the terminals occurs, in accordance with their ranking scores. These scores are not shown for simplicity, but in this example, the first terminal of ID 1001 is selected to be interrupted in the time slots 16:15 hrs to 16:30 hrs; the terminal of ID 1002 is selected in the time slots 16:15 hrs to 16:25 hrs and again in the time slot 16:30 hrs to 16:35 hrs; the terminal of ID 1003 is selected in the in the time slots 16:25 hrs to 16:35 hrs. It will be appreciated that, under the new arrangement, the total load is kept at the maximum of 1 unit for the duration indicated in the request.

The time slots that are interrupted must be rescheduled, represented with the word "shift" in **Fig. 5****,** so that the total duration of the charging cycles is maintained of each of the terminals. In this example embodiment, the rank assigning module has also determined into which time slots in the future charging can be shifted, as represented in the legend. This is done in order to avoid creating a time of high demand on the load just after the end of the execution of the request.

Finally, the commands communicating these instructions to the terminals are sent. For example, the terminal of ID 1002 receives a command or a series or commands indicating that it should stop drawing power at a time 16:15 hrs for ten minutes, again at a time of 16:35 hrs for fifteen minutes, and finally at a time of 16:55 hrs for five minutes.

In this exemplary embodiment, some of the processes described previously, such as the Predictor B, have not been included for simplicity.

The aforementioned processes, methods and system can be applied in diverse environments. As aforementioned, the method and system described in the present disclosure are applicable to electrical loads in general and not only to battery charging terminals coupled to EVs, provided that they fulfil a series of conditions as will now be elucidated below.

A first condition pertains to the electrical loads connected in the system needing to have means for being monitored by the central controller so that the usage information can be obtained from them; such monitoring is beneficially implemented using smart metering technology. Moreover, a second condition pertains to the electrical loads connected in the system being capable of altering their operating state, by sending commands as described previously or by other methods. Preferably, the usage of the loads must have some pattern, albeit a complex one, so that the management of their operating state can be done more efficiently, although this is optional when implementing the present invention.

As will be appreciated from the foregoing description of embodiments of the present invention, some of the major advantages of this method and system are the lack of a need to install extra hardware in any of the existing loads. In the case of electric vehicle (EV) charging, the management can be carried out without the need to know the charge state of batteries of the EVs, which prevents manufacturers from needing to install expensive additions to either the EVs or the battery charging terminals. It will also be appreciated that the system takes into account the satisfaction of the end user of the loads, in that the controlling of their operating state is executed in a manner that interfere with the user behaviour requirements of thier EV and furthermore the system has capacilty to automatically recognise and adapt to changes in the user behaviour model, vehicle battery capactiy if the user choses to change thier vehicle type. The system is also advantageous in that it communicates with the users, operators and balancing operators, namely informing them of its actions.

Those skilled in the art would realise that the above recognised advantages and other advantages described herein are merely exemplary and are not meant to be a complete rendering of all the advantages of the various embodiments.

## Claims

1. A method of managing load on a power grid supplying power to at least one electrical load, the method comprises:
a. monitoring an operating state of the at least one electrical load connected to the power grid in order to obtain usage information from the at least one electrical load;
b. the at least one electrical load is a battery charging terminal from which power is drawn by at least one of an electric vehicle (EV) and a hybrid electric vehicle (HEV).
c. generating predictions in a user behaviour model about the usage characteristics of the at least one electrical load in the grid by analyzing the usage information obtained from the at least one electrical load; **characterized by**
d. ranking of the at least one electrical load connected to the power grid, in order to determine the at least one of the electrical load whose operating state can be changed, wherein the ranking is established on a basis of factors which include a predicted operating state of each load, a recorded past operating state of each load, a likelihood of the predictions pertaining to each load being correct, user satisfaction, and costs involved with controlling each load;
e. receiving at least one request from at least one external agent requesting to alter an amount of power drawn from the power grid during a specified time frame, wherein the incoming request is assigned a priority score to indicate the importance of the incoming request; and
f. controlling the operating state of the at least one electrical load connected to the grid in order to respond to the at least one request, in accordance with the generated predictions.

2. The method of claim 1, **characterised in that** the operating state of the at least one electrical load is monitored at a central controller by using at least one communication channel between the at least one electrical load and the central controller.

3. The method of any one of the preceding claims, **characterised in that** monitoring of the at least one electrical load is performed without any active input from users of the at least one electrical load, wherein the monitoring is performed in at least one of: a continuous manner, a real time manner, and an intermittent manner when the at least one electrical load sends messages to the central controller.

4. The method of claim 3, **characterised in that** the at least one electrical load sends messages at a start of each usage cycle, at an end of the usage cycle, and at any time during the usage cycle.

5. The method of any one of the preceding claims, **characterised in that** the usage information obtained from the at least one electrical load is stored and analysed, wherein the analysis of the usage information includes the determination of a user behaviour model that indicates how the particular at least one electrical load is used, shall be used in the future and predictions to the current state of the electrical load as well as calculating parameters which include at least one of a frequency profile of usage cycles, a distribution of the lengths of the usage cycles, and a distribution of the power drawn during the usage cycles.

6. The method of any one of the preceding claims, **characterised in that** predictions about the usage characteristics of the at least one electrical load is generated by using stored historical information and parameters calculated, the predicted usage characteristics include at least one of: the duration of the usage cycles of the at least one electrical load, starting states of the electrical load that effects the next usage cycle, the next quantatitive energy expenditure that the at least one electrical load could need to be able to fulfil by way of having a stored energy capacity to enable the event, that the power drawn by the at least one electrical load during their usage, and a probability of the at least one load drawing power at specific times in the future.

7. The method of any one of the preceding claims, **characterised in that** at least one request received from the at least one external agent includes performing one of shedding a specified amount of power, maintaining a total amount of power supplied to the at least one electrical load below a specified maximum, and increasing the power supplied to the at least one electrical load.

8. The method of claim 7, **characterised in that** the at least one request specifies whether or not the at least one request should be applied to one of the whole grid and a subset of the grid, wherein the at least one request also specifies the time frame in which the at least one request should be executed.

9. The method of any one of the preceding claims, **characterised in that** when at least one request is received, includes a step of determining at least one of: to accept the at least one request completely, to accept the at least one request partially, and to reject the at least one request, based on the predictions obtained for one of the whole grid or subset of the grid.

10. The method of claim 1, **characterised in that** the ranking is established on a basis of factors which include the user behavioural model parameters such as starting states of the electrical load that shall effect the next usage cycle, the next quantatitive energy expenditure that the at least one electrical load shall need to be able to fulfil by way of having a stored energy capacity to enagle the event as well as predicted operating state of each load, the recorded operating state of each load in the past and the likelihood of the predictions pertaining to each load being correct.

11. The method of any one of the preceding claims, **characterised in that** the operating state of any of the at least one electrical load is controlled by sending at least one command via at least one communication channel, wherein the at least one command includes at least one of interrupting the usage of the at least one electrical load, reducing the power supplied to the at least one electrical load, increasing the power supplied to the at least one electrical load, and resuming the normal usage of the at least one electrical load, wherein the at least one command is executed on a basis of the time frame provided in the at least one command, wherein the at least one command is executed as soon as it is received when no time frame is mentioned in the at least one command.

12. A system for managing load on a power grid supplying power to at least one electrical load, the system comprises:
a. a monitoring module (205) configured to monitor an operating state of the at least one electrical load connected to the power grid in order to obtain usage information from the at least one electrical load;
b. a battery charging terminal (110, 115, 120), as the at least one electrical load, from which power is being drawn by at least one of: an electric vehicle (EV), a hybrid electric vehicle (HEV);
c. an analyzing module (210) configured to analyse the usage information obtained from the at least one electrical load to obtain predictions about the user behavioural model as well as usage characteristics of the at least one electrical load in the power grid, **characterized in that** the analyzing module includes a rank assigning module to establish a ranking of the at least one of the electrical load whose operating state can be changed, wherein the ranking is established on a basis of factors which include a predicted operating state of each load, a recorded past operating state of each load, a likelihood of the predictions pertaining to each load being correct, user satisfaction, and costs involved with controlling each load, and receiving at least one request from at least one external agent requesting to alter the amount of power drawn from the power grid during a specified time frame, wherein the incoming request is assigned a priority score to indicate the importance of the incoming request; and
d. a controlling module (215) configured to control the operating state of the at least one electrical load connected to the power grid in order to respond to the at least one request, in accordance with the predictions obtained.

13. The system of claim 12, **characterised in that** the monitoring module (205) includes a logging module (305), wherein the usage information obtained from the at least one electrical load is stored in the logging module (305) and analysed by the analysing module (210), wherein the analysis of the usage information and user behaviour includes calculating parameters which include at least one of a frequency profile of usage cycles, a distribution of the lengths of the usage cycles, and a distribution of the power drawn during the usage cycles.

14. The system of any one of claims 12 to 13, **characterised in that** the analyzing module (210) includes a request evaluating module (325), wherein when the at least one request is received, the request evaluating module determines one of:
a. to accept the at least one request completely;
b. to accept the at least one request partially; and
c. to reject the at least one request, on a basis of the predictions obtained for one of the whole grid or a subset of the power grid.

## Patentansprüche

1. Verfahren für ein Verwalten von Verbrauchern in einem Stromnetz, das wenigstens einen elektrischen Verbraucher mit Strom versorgt, das Verfahren umfassend:
a.Überwachen eines Betriebszustands des wenigstens einen mit dem Stromnetz verbundenen elektrischen Verbrauchers, um Nutzungsinformationen von dem wenigstens einen elektrischen Verbraucher zu erhalten;
b. der wenigstens eine elektrische Verbraucher ist eine Batterieladeklemmen, von der wenigstens eines von einem Elektrofahrzeug (EV) und einem Hybrid-Elektrofahrzeug (HEV) Strom entnimmt;
c.Erzeugen von Vorhersagen in einem Benutzerverhaltensmodell über die Nutzungseigenschaften des wenigstens einen elektrischen Verbrauchers in dem Netz durch Analysieren der von dem wenigstens einen elektrischen Verbraucher erhaltenen Nutzungsinformationen;
**gekennzeichnet durch**
d.Einstufen des wenigstens einen mit dem Stromnetz verbundenen elektrischen Verbrauchers, um den wenigstens einen der elektrischen Verbraucher zu bestimmen, dessen Betriebszustand geändert werden kann, wobei das Einstufen auf der Grundlage von Faktoren festgelegt wird, die einen vorhergesagten Betriebszustand jedes Verbrauchers, einen aufgezeichneten vergangenen Betriebszustand jedes Verbrauchers, eine Wahrscheinlichkeit, dass die jedem Verbraucher zugeordneten Vorhersagen richtig sind, eine Nutzerzufriedenheit und mit dem Steuern jedes Verbrauchers verbundene Kosten umfassen;
e.Empfangen wenigstens einer Anforderung von wenigstens einem externen Agenten, der eine Änderung einer aus dem Stromnetz während eines bestimmten Zeitrahmens entnommenen Leistungsmenge anfordert, wobei der eingehenden Anforderung eine Prioritätsbewertung zugewiesen wird, um die Wichtigkeit der eingehenden Anforderung anzugeben; und
f. Steuern des Betriebszustands des wenigstens einen mit dem Netz verbundenen elektrischen Verbrauchers, um auf die wenigstens eine Anforderung entsprechend den erzeugten Vorhersagen zu reagieren.

2. Verfahren nach Anspruch 1, **dadurch gekennzeichnet, dass** der Betriebszustand des wenigstens einen elektrischen Verbrauchers an einer zentralen Steuerung unter Verwendung wenigstens eines Kommunikationskanals zwischen dem wenigstens einen elektrischen Verbraucher und der zentralen Steuerung überwacht wird.

3. Verfahren nach einem der vorhergehenden Ansprüche, **dadurch gekennzeichnet, dass** das Überwachen des wenigstens einen elektrischen Verbrauchers ohne aktive Eingabe von Nutzern des wenigstens einen elektrischen Verbrauchers erfolgt, wobei das Überwachen in wenigstens einer erfolgt von: einer kontinuierlichen Weise, einer Echtzeit-Weise und einer intermittierenden Weise, wenn der wenigstens eine elektrische Verbraucher Meldungen an die zentrale Steuerung sendet.

4. Verfahren nach Anspruch 3, **dadurch gekennzeichnet, dass** der wenigstens eine elektrische Verbraucher zu Beginn eines jeden Nutzungszyklus, an dem Ende des Nutzungszyklus und zu jedem beliebigen Zeitpunkt während des Nutzungszyklus Meldungen sendet.

5. Verfahren nach einem der vorhergehenden Ansprüche, **dadurch gekennzeichnet, dass** die von wenigsten einem elektrischen Verbraucher erhaltenen Nutzungsinformationen gespeichert und analysiert werden, wobei das Analysieren der Nutzungsinformationen das Bestimmen eines Nutzerverhaltensmodells, das angibt, wie der bestimmte wenigstens eine elektrische Verbraucher genutzt wird, in Zukunft genutzt werden soll, und Vorhersagen zu dem aktuellen Zustand des elektrischen Verbrauchers sowie das Berechnen von Parametern umfasst, die wenigstens eines von einem Häufigkeitsprofil von Nutzungszyklen, einer Verteilung der Längen der Nutzungszyklen und einer Verteilung der während der Nutzungszyklen entnommenen Leistung umfassen.

6. Verfahren nach einem der vorhergehenden Ansprüche, **dadurch gekennzeichnet, dass** Vorhersagen über das Nutzungsverhalten des wenigsten einen elektrischen Verbrauchers unter Verwendung gespeicherter historischer Informationen und berechneter Parameter erstellt werden, die vorhergesagten Nutzungsverhalten umfassen wenigstens eines von: der Dauer der Nutzungszyklen von wenigstens einem elektrischen Verbrauchers, Startzuständen des elektrischen Verbrauchers, die den nächsten Nutzungszyklus bewirken, dem nächsten quantitativen Energieaufwand, den der wenigstens eine elektrische Verbraucher durch eine gespeicherte Energiekapazität erfüllen können müsste, um das Ereignis zu ermöglichen, der von dem wenigstens einen elektrischen Verbraucher während seiner Nutzung aufgenommenen Leistung, und einer Wahrscheinlichkeit, dass der wenigstens eine Verbraucher zu bestimmten Zeitpunkten in der Zukunft Leistung entnimmt.

7. Verfahren nach einem der vorhergehenden Ansprüche, **dadurch gekennzeichnet, dass** wenigstens eine von wenigsten einem externen Agenten empfangene Anforderung ein Durchführen eines von Verbreiten einer bestimmten Energiemenge, Aufrechterhalten einer Gesamtenergiemenge, die dem wenigstens einen elektrischen Verbraucher unterhalb eines bestimmten Maximums zugeführt wird, und Erhöhen der dem wenigstens einen elektrischen Verbraucher zugeführten Energie umfasst.

8. Verfahren nach Anspruch 7, **dadurch gekennzeichnet, dass** wenigstens eine Anforderung angibt, ob die wenigstens eine Anforderung entweder auf das gesamte Netz oder auf eine Teilmenge des Netzes angewendet werden soll oder nicht, wobei die wenigstens eine Anforderung auch den Zeitrahmen angibt, in dem die wenigstens eine Anforderung ausgeführt werden soll.

9. Verfahren nach einem der vorhergehenden Ansprüche, **dadurch gekennzeichnet, dass**, wenn wenigstens eine Anforderung empfangen wird, ein Schritt des Bestimmens umfasst ist von: vollständiges Akzeptieren der wenigstens einen Anforderung, teilweises Akzeptieren der wenigstens einen Anforderung und Zurückweisen der wenigstens einen Anforderung, basierend auf den Vorhersagen, die für eines von dem gesamten Netz oder einer Teilmenge des Netzes erhalten wurden.

10. Verfahren nach Anspruch 1, **dadurch gekennzeichnet, dass** das Einstufen auf der Grundlage von Faktoren festgelegt wird, die die Parameter des Nutzerverhaltensmodells umfassen, beispielsweise Startzustände des elektrischen Verbrauchers, die den nächsten Nutzungszyklus bewirken sollen, den nächsten quantitativen Energieaufwand, den der wenigstens eine elektrische Verbraucher durch eine gespeicherte Energiekapazität erfüllen können muss, um das Ereignis zu ermöglichen, sowie den vorhergesagten Betriebszustand jedes Verbrauchers, den aufgezeichneten Betriebszustand jedes Verbrauchers in der Vergangenheit und die Wahrscheinlichkeit, dass die Vorhersagen in Bezug auf jeden Verbraucher richtig sind.

11. Verfahren nach einem der vorhergehenden Ansprüche, **dadurch gekennzeichnet, dass** der Betriebszustand eines beliebigen einen des wenigstens einen elektrischen Verbrauchers durch Senden wenigstens eines Befehls über wenigstens einen Kommunikationskanal gesteuert wird, wobei der wenigstens eine Befehl wenigstens eines umfasst von Unterbrechen der Verwendung des wenigstens einen elektrischen Verbrauchers, Reduzieren der dem wenigsten einen elektrischen Verbraucher zugeführten Leistung, Erhöhen der dem wenigstens einen elektrischen Verbraucher zugeführten Leistung und Wiederaufnehmen der normalen Nutzung des wenigstens einen elektrischen Verbrauchers, wobei der wenigstens eine Befehl auf der Grundlage des in dem wenigstens einen Befehl vorgesehenen Zeitrahmens ausgeführt wird, wobei der wenigstens eine Befehl ausgeführt wird, sobald er empfangen wird, wenn in dem wenigstens einen Befehl kein Zeitrahmen erwähnt wird.

12. System für ein Verwalten von Verbrauchern in einem Stromnetz, das wenigstens einen elektrischen Verbraucher mit Strom versorgt, das System umfassend:
a. ein Überwachungsmodul (205), das dazu ausgelegt ist, einen Betriebszustand des wenigstens einen elektrischen Verbrauchers zu überwachen, der mit dem Stromnetz verbunden ist, um Nutzungsinformationen von dem wenigstens einen elektrischen Verbraucher zu erhalten;
b. eine Batterieladeklemme (110, 115, 120), als den wenigstens ein elektrischer Verbraucher, von der Strom entnommen wird von wenigstens einem von: einem Elektrofahrzeug (EV), einem Hybridelektrofahrzeug (HEV);
c. ein Analysemodul (210), das dazu ausgelegt ist, die von dem wenigstens einen elektrischen Verbraucher erhaltenen Nutzungsinformationen zu analysieren, um Vorhersagen über das Nutzerverhaltensmodell sowie über die Nutzungseigenschaften des wenigstens einen elektrischen Verbrauchers in dem Stromnetz zu erhalten, **dadurch gekennzeichnet, dass**
das Analysemodul ein Einstufungszuweisungsmodul umfasst, um eine Einstufung des wenigstens einen elektrischen Verbrauchers, dessen Betriebszustand geändert werden kann, festzulegen, wobei das Einstufen auf der Grundlage von Faktoren festgelegt wird, die einen vorhergesagten Betriebszustand jedes Verbrauchers, einen aufgezeichneten vergangenen Betriebszustand jedes Verbrauchers, eine Wahrscheinlichkeit, dass die jedem Verbraucher zugeordnete Vorhersagen richtig sind, Nutzerzufriedenheit und mit dem Steuern jedes Verbrauchers verbundene Kosten, und Empfangen wenigstens einer Anforderung von wenigstens einem externen Agenten, der eine Änderung einer während eines angegebenen Zeitrahmens aus dem Stromnetz entnommenen Energiemenge anfordert, wobei der eingehenden Anforderung eine Prioritätsbewertung zugewiesen wird, um die Wichtigkeit der eingehenden Anforderung anzugeben; und
d. ein Steuermodul (215), das dazu ausgelegt ist, den Betriebszustand des wenigstens einen elektrischen Verbrauchers, der mit dem Stromnetz verbunden ist, zu steuern, um auf die wenigstens eine Anforderung in Übereinstimmung mit den erhaltenen Vorhersagen zu reagieren.

13. System nach Anspruch 12, **dadurch gekennzeichnet, dass** das Überwachungsmodul (205) ein Protokollierungsmodul (305) umfasst, wobei die von dem wenigstens einen elektrischen Verbraucher erhaltenen Nutzungsinformationen in dem Protokollierungsmodul (305) gespeichert und von dem Analysemodul (210) analysiert werden, wobei die Analyse der Nutzungsinformationen und des Nutzerverhaltens ein Berechnen von Parametern umfasst, die wenigstens eines von einem Häufigkeitsprofil von Nutzungszyklen, einer Verteilung der Längen der Nutzungszyklen und einer Verteilung der während der Nutzungszyklen entnommenen Leistung umfassen.

14. System nach einem der Ansprüche 12 bis 13, **dadurch gekennzeichnet, dass** das Analysemodul (210) ein Anforderungsauswertungsmodul (325) umfasst, wobei das Anforderungsauswertungsmodul, wenn die wenigstens eine Anforderung empfangen wird, eines bestimmt von:
a. vollständiges Akzeptieren der wenigstens einen Anforderung;
b. teilweises Akzeptieren der wenigstens einen Anforderung; und
c. Zurückweisen der wenigstens einen Anforderung, basierend auf den Vorhersagen die für eines von dem gesamten Netz oder einer Teilmenge des Netzes erhalten wurden.

## Revendications

1. Procédé de gestion de charge sur un réseau électrique fournissant de la puissance à au moins une charge électrique, le procédé comprenant :
a. la surveillance d'un état de fonctionnement de l'au moins une charge électrique connectée au réseau électrique afin d'obtenir des informations d'utilisation de l'au moins une charge électrique ;
b. l'au moins une charge électrique est une borne de charge de batterie à partir de laquelle de la puissance est prélevée par au moins l'un parmi un véhicule électrique (EV) et un véhicule électrique hybride (HEV) ;
c. la génération de prédictions dans un modèle de comportement d'utilisateur concernant les caractéristiques d'utilisation de l'au moins une charge électrique dans le réseau par analyse des informations d'utilisation obtenues à partir de l'au moins une charge électrique ;
**caractérisé par**
d. le classement de l'au moins une charge électrique connectée au réseau électrique, afin de déterminer l'au moins une de la charge électrique dont l'état de fonctionnement peut être modifié, dans lequel le classement est établi sur la base de facteurs qui comportent un état de fonctionnement prédit de chaque charge, un état de fonctionnement passé enregistré de chaque charge, une probabilité pour les prédictions concernant chaque charge d'être correctes, la satisfaction d'utilisateur, et les coûts impliqués dans la commande de chaque charge ;
e. la réception d'au moins une demande à partir d'au moins un agent externe demandant de modifier une quantité de puissance prélevée sur le réseau électrique pendant un intervalle de temps spécifié, dans lequel un score de priorité est attribué à la demande entrante pour indiquer l'importance de la demande entrante ; et
f. la commande de l'état de fonctionnement de l'au moins une charge électrique connectée au réseau afin de répondre à l'au moins une demande, conformément aux prédictions générées.

2. Procédé selon la revendication 1, **caractérisé en ce que** l'état de fonctionnement de l'au moins une charge électrique est surveillé au niveau d'un dispositif de commande central à l'aide d'au moins un canal de communication entre l'au moins une charge électrique et le dispositif de commande central.

3. Procédé selon l'une quelconque des revendications précédentes, **caractérisé en ce que** la surveillance de l'au moins une charge électrique est réalisée sans aucune entrée active à partir d'utilisateurs de l'au moins une charge électrique, dans lequel la surveillance est réalisée d'au moins l'une des manières suivantes : d'une manière continue, d'une manière en temps réel, et d'une manière intermittente lorsque l'au moins une charge électrique envoie des messages au dispositif de commande central.

4. Procédé selon la revendication 3, **caractérisé en ce que** l'au moins une charge électrique envoie des messages à un début de chaque cycle d'utilisation, à une fin du cycle d'utilisation, et à tout moment pendant le cycle d'utilisation.

5. Procédé selon l'une quelconque des revendications précédentes, **caractérisé en ce que** les informations d'utilisation obtenues à partir de l'au moins une charge électrique sont stockées et analysées, dans lequel l'analyse des informations d'utilisation comporte la détermination d'un modèle de comportement d'utilisateur qui indique comment l'au moins une charge électrique particulière est utilisée, sera utilisée dans le futur et des prédictions sur l'état actuel de la charge électrique ainsi que des paramètres de calcul qui comportent au moins un élément parmi un profil de fréquence des cycles d'utilisation, une distribution des longueurs des cycles d'utilisation, et une distribution de la puissance prélevée pendant les cycles d'utilisation.

6. Procédé selon l'une quelconque des revendications précédentes, **caractérisé en ce que** des prédictions concernant les caractéristiques d'utilisation de l'au moins une charge électrique sont générées à l'aide d'un historique d'informations stocké et de paramètres calculés, les caractéristiques d'utilisation prédites comportent au moins un élément parmi : la durée des cycles d'utilisation de l'au moins une charge électrique, des états de démarrage de la charge électrique qui affectent le cycle d'utilisation suivant, la prochaine dépense d'énergie quantitative que ladite au moins une charge électrique pourrait être en mesure de réaliser au moyen d'une capacité d'énergie stockée pour permettre l'événement, la puissance prélevée par l'au moins une charge électrique pendant son utilisation, et une probabilité pour l'au moins une charge de prélever de la puissance à des moments spécifiques dans le futur.

7. Procédé selon l'une quelconque des revendications précédentes, **caractérisé en ce qu'**au moins une demande reçue à partir de l'au moins un agent externe comporte la réalisation de l'un parmi un délestage d'une quantité spécifiée de puissance, le maintien d'une quantité totale de puissance fournie à l'au moins une charge électrique au-dessous d'un maximum spécifié, et l'augmentation de la puissance fournie à l'au moins une charge électrique.

8. Procédé selon la revendication 7, **caractérisé en ce que** l'au moins une demande spécifie si oui ou non l'au moins une demande doit être appliquée à l'un parmi le réseau dans son ensemble et un sous-ensemble du réseau, dans lequel l'au moins une demande spécifie également l'intervalle de temps dans lequel l'au moins une demande doit être exécutée.

9. Procédé selon l'une quelconque des revendications précédentes, **caractérisé en ce que**, lorsqu'au moins une demande est reçue, il comprend une étape consistant à déterminer au moins l'un parmi : l'acceptation de l'au moins une demande complètement, l'acceptation de l'au moins une demande partiellement, et le rejet de l'au moins une demande, sur la base des prédictions obtenues pour l'un parmi le réseau dans son ensemble et le sous-ensemble du réseau.

10. Procédé selon la revendication 1, **caractérisé en ce que** le classement est établi sur la base de facteurs qui comportent les paramètres de modèle de comportement d'utilisateur tels que des états de démarrage de la charge électrique qui devra effectuer le cycle d'utilisation suivant, la prochaine dépense d'énergie quantitative que l'au moins une charge électrique devra être en mesure de réaliser au moyen d'une capacité d'énergie stockée pour permettre l'événement ainsi que l'état de fonctionnement prédit de chaque charge, l'état de fonctionnement enregistré de chaque charge dans le passé et la probabilité pour les prédictions concernant chaque charge d'être correctes.

11. Procédé selon l'une quelconque des revendications précédentes, **caractérisé en ce que** l'état de fonctionnement de l'une quelconque de l'au moins une charge électrique est commandé par l'envoi d'au moins un ordre via au moins un canal de communication, dans lequel l'au moins un ordre comporte au moins l'une parmi l'interruption de l'utilisation de l'au moins une charge électrique, la réduction de la puissance fournie à l'au moins une charge électrique, l'augmentation de la puissance fournie à l'au moins une charge électrique, et la reprise de l'utilisation normale de l'au moins une charge électrique, dans lequel l'au moins un ordre est exécuté sur la base de l'intervalle de temps fourni dans l'au moins un ordre, dans lequel l'au moins un ordre est exécuté dès qu'il est reçu lorsqu'aucun intervalle de temps n'est mentionné dans l'au moins un ordre.

12. Système de gestion de charge sur un réseau électrique fournissant de la puissance à au moins une charge électrique, le système comprenant :
a. un module de surveillance (205) configuré pour surveiller un état de fonctionnement de l'au moins une charge électrique connectée au réseau électrique afin d'obtenir des informations d'utilisation à partir de l'au moins une charge électrique ;
b.une borne de charge de batterie (110, 115, 120), en tant qu'au moins une charge électrique, à partir de laquelle de la puissance est prélevée par au moins l'un parmi : un véhicule électrique (EV), un véhicule électrique hybride (HEV) ;
c.un module d'analyse (210) configuré pour analyser les informations d'utilisation obtenues à partir de l'au moins une charge électrique pour obtenir des prédictions concernant le modèle de comportement d'utilisateur ainsi que des caractéristiques d'utilisation de l'au moins une charge électrique dans le réseau électrique, **caractérisé en ce que**
le module d'analyse comporte un module d'attribution de rang pour établir un classement de l'au moins une charge électrique dont l'état de fonctionnement peut être modifié, dans lequel le classement est établi sur la base de facteurs qui comportent un état de fonctionnement prédit de chaque charge, un état de fonctionnement passé enregistré de chaque charge, une probabilité pour les prédictions concernant chaque charge d'être correctes, la satisfaction d'utilisateur, et les coûts impliqués dans la commande de chaque charge ; et recevant au moins une demande à partir d'au moins un agent externe demandant de modifier une quantité de puissance prélevée sur le réseau électrique pendant un intervalle de temps spécifié, dans lequel un score de priorité est attribué à la demande entrante pour indiquer l'importance de la demande entrante ; et
d. un module de commande (215) configuré pour commander l'état de fonctionnement de l'au moins une charge électrique connectée au réseau électrique afin de répondre à l'au moins une demande, conformément aux prédictions obtenues.

13. Système selon la revendication 12, **caractérisé en ce que** le module de surveillance (205) comporte un module de journalisation (305), dans lequel les informations d'utilisation obtenues à partir de l'au moins une charge électrique sont stockées dans le module de journalisation (305) et analysées par le module d'analyse (210), dans lequel l'analyse des informations d'utilisation et du comportement d'utilisateur comprend le calcul de paramètres qui comportent au moins l'un parmi un profil de fréquence de cycles d'utilisation, une distribution des longueurs des cycles d'utilisation, et une distribution de la puissance prélevée pendant les cycles d'utilisation.

14. Système selon l'une quelconque des revendications 12 et 13, **caractérisé en ce que** le module d'analyse (210) comporte un module d' évaluation de demande (325), dans lequel, lorsque l'au moins une demande est reçue, le module d'évaluation de demande détermine l'un parmi :
a.l'acceptation de l'au moins une demande complètement ;
b. l'acceptation de l'au moins une demande partiellement ; et
c. le rejet de l'au moins une demande, sur la base des prédictions obtenues pour l'un parmi le réseau dans son ensemble ou un sous-ensemble du réseau électrique.
